# EUROPÄISCHE PATENTANMELDUNG

(11) **EP 0 865 891 A2**
(43) Veröffentlichungstag der Anmeldung: **23.09.1998**
(21) Anmeldenummer: 98810198.6
(22) Anmeldetag: 10.03.1998
(51) Int. Cl.: B29B 11/16

(54) **Faserbewehrtes Granulat zum Spritzgiessen von Formteilen und ein Verfahren zur Herstellung von faserbewehrtem Granulat**

(30) Priorität: 10.03.1997 CH 560/97
(71) Anmelder: Genossenschaft Biomasse Technologie, 8280 Kreuzlingen (CH)
(72) Erfinder: Henn, Christoph, 8596 Scherzingen (CH)
(74) Vertreter: Gachnang, Hans Rudolf

(57) **Zusammenfassung**

Das faserbewehrte Granulat zum Spritzgiessen von bakteriell abbaubaren Formteilen umfasst einen Binder und im Binder eingebettete natürliche Fasern. Als Binder wird Cellulose 2,5 Acetat eingesetzt. Dieses verbindet sich erst beim Spritzgiessen mit dem Cellulose 2,5 Acetat.

## Beschreibung

Gegenstand der Erfindung ist ein Granulat zum Spritzgiessen von Formteilen gemäss Oberbegriff des Anspruchs 1.
Gegenstand der Erfindung ist weiter ein Verfahren zur Herstellung von faserbewehrtem Granulat gemäss Oberbegriff des Anspruchs 6.

Die Herstellung von Formteilen aus faserbewehrtem Granulat ist seit langem bekannt. Üblicherweise werden aus Erdöl hergestellte Kunststoffe als Matrix und anorganische Fasern, insbesondere Glasfasern, eingesetzt. Diese Produkte sind weder biologisch abbaubar noch können sie wiederverwertet werden.

Aus dem Stand der Technik, z.B. aus der WO 95/04111, ist ein Granulat bekannt, das durch Extrusion aus pflanzlichen Fasern und einem als Matrix dienenden Bindemittel, wie Harzsäure, Fett, Öl, Wachs, expansionsunterdrückenden Polyolen sowie Salzen, erzeugt wird. Dieses bekannte Produkt lässt nur einen prozentual kleinen Faseranteil in der gesamten Masse zu, was sich nachteilig auf die Festigkeit des Endproduktes auswirkt.

Es ist auch eine Fasern enthaltende Formmasse zum Heisspressen von Formteilen bekannt, welche einen Faseranteil von bis zu 75% aufweisen kann. Diese Formmasse lässt sich nur durch ein aufwendiges, teures und folglich für die Massenfertigung nicht geeignetes Heisspressen einsetzen. Heisspressanlagen sind aufwendig und zudem nicht sehr verbreitet.

Ein weiteres für das Spritzgussverfahren entwickeltes Granulat stellt die Firma Durerba in CH-8280 Kreuzlingen her. Dieses ist zwar biologisch abbaubar, weicht aber unter anderem wegen des hohen Wassergehaltes von den heute üblichen Verarbeitungsparametern von PE und PP ab. Dies führt zu einem nicht tolerierbaren Mehraufwand bei der Anpassung von Verarbeitungsmaschinen und -werkzeugen. Die mit diesem Produkt meist im Stangenangussverfahren gefertigten Formteile sind dickwandig und sehr empfindlich gegen Feuchtigkeit. Letzteres schränkt den Einsatz solcher Produkte stark ein.

Aufgabe der Erfindung ist die Schaffung eines faserbewehrten Granulats zum Spritzgiessen von Formteilen, das sich auf den herkömmlichen, in grosser Zahl überall vorhandenen Spritzgiessmaschinen verarbeiten lässt.

Aufgabe der Erfindung ist weiter ein Verfahren zur Herstellung von faserbewehrtem Granulat.

Gelöst werden die Aufgaben gemäss den Merkmalen der Ansprüche 1 bzw. 6.

Bakteriell abbaubares Granulat nach der Erfindung aus Naturfasern und Cellulose 2,5 Acetat lässt sich bei Temperaturen zwischen 190° und 210° auf herkömmlichen Spritzgussmaschinen verarbeiten, so dass eine Anpassung oder Umstellung der Spritzgussmaschinen von herkömmlich hergestellten Granulaten auf das erfindungsgemässe nicht notwenig ist. Es können die bestehenden Werkzeuge benutzt werden, was zu Kosteneinsparungen führt.

Die Verbindung der natürlichen Fasern mit der Matrix ist gegenüber den bisher bekannten Produkten wesentlich höher; wobei die endgültige starke Bindung erst beim Spritzgiessen eintritt. Das Granulat weist selbst noch eine eher lose und zudem grösstenteils nur mechanische Bindung durch das Pressen beim Pelletieren des Faser-Binder-Weichmacher-Gemisches auf. Durch die beim Pelletieren entstehende oberflächliche Erwärmung ergibt sich eine Bindung zwischen den Fasern oder Faserbündeln und dem Binder vorwiegend im Bereich der Pelletoberfläche, die aber stets noch wasserdampfdurchlässig bleibt, wenn abbaubare Fasern und Binder eingesetzt werden. Eine weitere Trocknung des Granulats lässt sich folglich mit geringem Zeit- und Energieaufwand durchführen. Die Verarbeitung der eine geringe Festigkeit aufweisenden Pellets ist sehr einfach.

Gleiches gilt auch bei dem nach dem erfindungsgemässen Verfahren durch Pelletieren auf einer Würfelpresse hergestelltem Granulat mit petrochemischer Matrix, beispielsweise Polypropylen (PP) oder anderer Kunststoff.

Ein ganz besonderer Vorteil besteht in der Festigkeit und Formstabilität der erzeugten Formteile. Die Ausformung nach dem Spritzvorgang kann bei den verwendeten abbaubaren Bindern sehr rasch erfolgen und ermöglicht damit eine hohe Spritzkadenz, die mit petrochemischen Produkten vergleichbar ist.

Die Formteile können im wesentlichen in allen Bereichen der Technik, wie Elektro- und Automobilindustrie, Bürobedarf, hochwertige Gebrauchsgegenstände sowie Kinderspielzeuge, verwendet werden. Der neue ökologische Werkstoff ist aber besonders vorteilhaft und wertvoll wegen seiner Rezyklierbarkeit (geschredderte Formteile können direkt durch Beigabe zu Neugranulat wieder verspritzt werden). Durch mikrobiellen Abbau und Freiheit von giftigen Substanzen kann das Produkt der Natur zurückgegeben werden. Dennoch sind die aus dem Werkstoff hergestellten Formteile wasserfest, weil der biologische Abbau ausschliesslich durch einen mikrobiellen Prozess, z.B. in einem Komposthaufen, erfolgt.

Die Herstellung des Granulats in einer Würfel- oder Pelletierpresse ist nicht nur sehr kostengünstig, sondern durch den Pressvorgang kann eine Verschmelzung des Binders auf den Oberflächenbereich begrenzt werden. Dies erlaubt es, die Pellets staubfrei zu machen und deren Kern, da nur mechanisch gebunden, "weich" zu halten.

Die Erfindung wird nachfolgend am Beispiel für ein bakteriell abbaubares Granulat näher beschrieben.

Als Faserstoffe können Chinaschilffasern verwendet werden. Es ist auch möglich, andere hier nicht angeführte Fasern bzw. Faserbüschel zu verwenden. Das Ausgangsprodukt wird vorzugsweise mechanisch aufbereitet zu Faserbüschel. Dies kann beispielsweise in einer Schlagmühle mit einer Matrize erfolgen.

Die Faserbüschel werden danach mit Cellulose 2,5 Acetat unter Beigabe eines Weichmachers, z.B. Triacetin oder Glycerin, oder mit Bioceta vermischt, wobei ein Faseranteil von bis zu 50% möglich ist. Eine mögliche vorteilhafte Mischung enthält folgende Gewichtsanteile: 25% Fasern, 60 % Cellulose 2,5 Acetat und 15 % Triacetin. Diese ermöglicht eine Verarbeitung des Granulats ohne Anpassung insbesondere der Düsen in den Spritzgussmaschinen und erlaubt zudem einen Punktanguss. Bei höheren Faseranteilen kann das Spritzen im Stangenangussverfahren erfolgen. Dieser hohe Faseranteil bewirkt nebst der optimalen Verbindung der Fasern mit der Matrix die hohe Festigkeit der Formteile.

Das in einem Mischer hergestellte Faser-Binder-Weichmacher-Gemisch wird anschliessend zu einem Granulat verpresst. Als besonders vorteilhaft und mit einer hohen Leistung hat sich für diesen Arbeitsgang eine Würfelpresse, auch Pelletiermaschine genannt, erwiesen. Beim Pelletieren kann nicht nur eine hohe stündliche Leistung erreicht werden, was zu niedrigen Kosten führt, sondern die beim Pressen entstehende Prozesswärme fällt nur klebewirksam an der Oberfläche an und macht diese staubfrei, ohne das Innere aufzuschmelzen. Eine stündliche Produktion von 1,5 bis 5 Tonnen oder mehr kann auf diese Weise erreicht werden.

Die Erzeugung des Granulats erfolgt ohne Zuführung von Wärme oder Zugabe von Wasser. Dadurch lässt sich ein bereits fast wasserfreies Ausgangsprodukt für die Spritzgussmaschine erzeugen. Die Restfeuchtigkeit kann, falls notwendig, vor dem Spritzen mit geringem Energieaufwand auf unter 1% gesenkt werden.

Das natürliche Fasern enthaltende Granulat wird in bekannter Weise auf einer Spritzgussanlage verarbeitet werden, wobei das Granulat aufgeschmolzen und die innige Bindung zwischen den Fasern, dem Binder und dem Weichmacher eintritt. Die in der Schnecke der Spritzgussmaschine erzeugte Schmelze ist sehr homogen und weist ausgezeichnete Fliesseigenschaften auf.

Unter hohem Druck und hoher Temperatur schwitzen die Fasern Lignin insbesondere beim Durchgang durch die beheizte Düse beim Eintritt in die Kavität des Werkzeuges aus. Dadurch gehen die Fasern eine sehr intensive Verbindung mit der Matrix, hier Cellulose 2,5 Acetat und Weichmacher oder Cellulosediacetat, ein. Das ausgeschwitzte Lignin bildet nämlich den Kleber zwischen den Fasern und dem als Matrix dienenden Binder und bewirkt eine bisher unerreicht gute Anbindung. Nach der Erkaltung des aus dem erfindungsgemässen Granulat hergestellten Formteiles weist letzteres eine hohe Festigkeit auf.

Die braune, vom Lignin stammende Farbe der Formteile kann durch Zugabe von andersfarbigen Pigmenten, z.B. Titandioxid oder Eisenoxidpigmente, selbstverständlich auch geändert werden.

Alternativ zu bakteriell abbaubaren Grundstoffen lässt sich auch ein Granulat auf petrochemischer Basis erzeugen, indem anstelle von Cellulose 2,5 Acetat neuer oder recyclierter Kunststoff und Fasern durch Pelletieren auf einer Würfelpresse zu Granulat gepresst wird. Beim Pressen schmilzt der Kunststoff oberflächlich an und bildet eine das Granulatstück umgebende Haut. Das Innere des Granulatstücks ist nicht mit den beigemischten Fasern verklebt und daher weicher als ein auf einem Doppelschneckenextruder herkömmlich erzeugtes Granulat.

Es lassen sich beispielsweise Granulate mit bis zu 50% Chinaschilffasern mit einer Kunststoffmatrix herstellen. Der Anteil der Kunststoffmatrix kann andererseits bis zu 80% der Granulatmasse umfassen.

## Patentansprüche

1. Faserbewehrtes Granulat zum Spritzgiessen von Formteilen, umfassend einen Binder und im Binder eingebettete natürliche oder künstliche Fasern, dadurch gekennzeichnet, dass das Granulat aus dem die Matrix bildenden Binder und den Fasern durch einen reinen Press- oder Pelletiervorgang erzeugt ist.

2. Granulat nach Anspruch 1, dadurch gekennzeichnet, dass das Granulat aus mit Cellulose 2,5 Acetat und einem Weichmacher vermischten Naturfaserbüscheln bzw. Faserbündeln besteht.

3. Granulat nach Anspruch 2, dadurch gekennzeichnet, dass als Fasern Chinaschilffasern oder andere Pflanzenfasern verwendet werden.

4. Granulat nach einem der Ansprüche 2 oder 3, dadurch gekennzeichnet, dass als Weichmacher Triacetin oder Glycerin verwendet wird.

5. Granulat nach einem der Ansprüche 1 bis 4, dadurch gekennzeichnet, dass die Fasern an der Oberfläche des Granulats teilweise mit dem Binder verklebt sind und im Innern des Granulats nur eine mechanische, durch Pressung erzeugte Bindung vorliegt.

6. Verfahren zur Herstellung von faserbewehrtem Granulat, umfassend eine Matrix und in die Matrix eingearbeitete Fasern, dadurch gekennzeichnet,
- dass die Faserausgangsprodukte in einer Zerkleinerungs- oder Vereinzelungsvorrichtung in einzelne Fasern oder Faserbüschel aufgelöst werden,
- dass in die Fasern in einem vorgegebenen Gewichtsverhältnis die Matrix eingemischt wird,
- dass das Gemisch anschliessend in einer Presse unter hohem Druck zu Granulat oder Pellets verpresst wird.

7. Verfahren nach Anspruch 6, dadurch gekennzeichnet, dass das Gemisch auf einer Würfelpresse pelletiert oder granuliert wird.

8. Verfahren nach einem der Ansprüche 6 oder 7, dadurch gekennzeichnet, dass durch die Prozesswärme beim Pressen und Pelletieren die Matrix an der Oberfläche der Pellets erweicht oder aufgeschmolzen wird und dort eine innige Bindung mit den Fasern eingeht.

9. Verfahren nach einem der Ansprüche 6 bis 8, dadurch gekennzeichnet, dass das Granulat folgende Gewichtsanteile enthält: bis 50% Fasern, bis 80% Binder aus Cellulose 2,5 Acetat und bis 25% Weichmacher oder bis 80% Binder aus Kunststoff.

10. Verfahren nach Anspruch 9, dadurch gekennzeichnet, dass das Granulat folgende Gewichtsanteile enthält: 25% Chinaschilffaserbündel, 60% Cellulose 2,5 Acetat und 15% Triacetin oder Glycerin, oder 20% bis 50% natürliche Fasern und 50% bis 80% Polypropylen.
